# EUROPEAN PATENT SPECIFICATION

(11) **EP 0 996 557 B1**
(45) Date of publication and mention of the grant of the patent: **31.10.2012**
(21) Application number: 98939092.7
(22) Date of filing: 23.07.1998
(51) Int. Cl.: B60R 21/015, B60N 2/00

(54) **CAPACITIVE SENSING IN VEHICLES**
KAPAZITIVE DETEKTION FÜR FAHRZEUGE
DETECTION A CAPACITE POUR VEHICULES

(30) Priority: 25.07.1997 US 53733 P; 20.11.1997 US 66235 P; 29.04.1998 US 83456 P
(43) Date of publication of application: 03.05.2000
(73) Proprietor: Methode Electronics, Inc., Chicago, IL 60606 (US)
(72) Inventor: KITHIL, Philip, W., Santa Fe, NM 87501 (US); BARRON, Michael, H., Santa Fe, NM 87505 (US); McINTOSH, William, C., Santa Fe, NM 87501 (US); FULLAM, Philip, Chimayo, NM 87522 (US); NOVAK, James, L., Albuquerque, NM 87111 (US)
(74) Representative: Van Breda, Jacobus
(86) International application number: PCT/US1998/015505
(87) International publication number: WO 1999/005008

(56) References cited:
- WO-A-97/01458
- DE-A1- 19 503 203
- US-A- 5 330 226
- US-A- 5 602 734
- US-A- 5 653 462
- US-A- 5 702 123
- US-A- 5 722 686
- US-A- 5 722 686

## Description

### CROSS-REFERENCE TO RELATED APPLICATIONS

This application claims the benefit of the filing of U.S. Provisional Patent Applications Serial No. 60/053,733, entitled *Capacitive Occupant Sensor,* filed on July 25, 1997; Serial No. 60/066,235, entitled *Capacitive Sensor Design and Vehicle Safety Applications,* filed on November 20, 1997; and Serial No. 60/083,456, entitled *Capacitive Sensors - Molded and Embedded Electrodes,* filed on April 29, 1998.

This application is related to U.S. Patent Nos. 5,366,241, 5,602,734, and 5,691,693; U.S. Patent Application Serial Nos. 08/621,465 and 08/778,871; and Patent Cooperation Treaty Application Serial Nos. PCT/US95/12077, PCT/US96/14060, PCT/US97/03510, and PCT/US97/06822.

### BACKGROUND OF THE INVENTION

### Field of the Invention (Technical Field):

The present invention relates to capacitive sensors, particularly those employed as vehicle occupant sensors.

### Background Art:

Sensor technologies are becoming increasingly important in the development of safety and convenience features of vehicles. Because of differing vehicle geometries and extreme environmental conditions to which they are subjected, the sensors presently available are deficient in many regards. The present invention provides apparatuses and methods addressing such deficiencies, as described in the description of the preferred embodiments, below.

The current state of the art is reflected by the following patents: U.S. Patent No. 5,702,123, to Takahashi et al., entitled "Air Bag Apparatus for Passenger Seat"; U.S. Patent No. 5,653,462, to Breed et al., entitled "Vehicle Occupant Position and Velocity Sensor"; U.S. Patent No. 5,602,734, to Kithil, entitled "Automobile Air Bag Systems"; U.S. Patent No. 5,549,323, to Davis, entitled "Plastic Air Bag Cover Having an Integrated Occupant-Sensing Sensor Module"; U.S. Patent No. 5,512,836, to Chen et al., entitled "Solid-State Proximity Sensor"; U.S. Patent No. 5,366,241, to Kithil, entitled "Automobile Air Bag System"; U.S. Patent No. 5,363,051, to Jenstrom et al., entitled "Steering Capaciflector Sensor"; and U.S. Patent No. 5,118,134, to Mattes et al., entitled "Method and Apparatus for Protecting Motor Vehicle Occupants".

WO 97/01458 A discloses a system for sensing the presence of an object within a vehicle's passenger compartment including an occupant in a motor vehicle.

### SUMMARY OF THE INVENTION (DISCLOSURE OF THE INVENTION)

The present invention is of a passenger sensing system comprising a plurality of electrodes positioned proximate an airbag door, each providing a signal corresponding to occupant proximity, and a comparator for comparing the signals, the electrodes optionally being embedded around a perimeter of the airbag door. In the preferred embodiment, the comparator determines a percentage of signals exceeding one or more predetermined thresholds and occupant acceleration, velocity, two-dimensional position, and/or three-dimensional position.

The invention is also of a sensor comprising a plurality of electrodes formed on a dielectric substrate and separated by a grounded area configured to block line-of-sight between each of the electrodes. In the preferred embodiment, the substrate is convex with respect to the electrodes.

The invention is additionally of a capacitive sensor comprising a plurality of electrodes comprising conductive material attached to dielectric material comprising a conductive coating on one surface. In the preferred embodiment, one or more of the electrodes are formed on one layer of the conductive coating and a second layer of the conductive coating is connected to ground, the sensor provides a signal used to modify deployment parameters of a vehicle airbag system and to determine proximity of a person to the dielectric material. Preferably, the dielectric material is glass. The invention is particularly useful for vehicle sunvisors.

The invention is further of an integrated circuit comprising supporting electronics for a plurality of capacitive sensors and means for providing oscillator output to a second integrated circuit.

The invention is still further of a capacitive sensor comprising electrodes embedded within a vehicle trimpiece and adjacent to a conductive material connected to ground. In the preferred embodiment, the material is planar and a DC voltage is applied to one electrode to form a conductive path to a second electrode, the conductive path being formed by moisture.

The invention is yet further of a capacitive sensor comprising a drive electrode and a receive electrode, the electrodes formed integrally with a vehicle window. In the preferred embodiment, one of the electrodes is formed into a U-shape surrounding the other of the electrodes. A plurality of pairs of drive and receive electrodes may be employed.

A primary object of the present invention is to provide sensor technologies appropriate for multiple vehicle geometries and environmental conditions.

Other objects, advantages and novel features, and further scope of applicability of the present invention will be set forth in part in the detailed description to follow, taken in conjunction with the accompanying drawings, and in part will become apparent to those skilled in the art upon examination of the following, or may be learned by practice of the invention. The objects and advantages of the invention may be realized and attained by means of the instrumentalities and combinations particularly pointed out in the appended claims.

### BRIEF DESCRIPTION OF THE DRAWINGS

The accompanying drawings, which are incorporated into and form a part of the specification, illustrate several embodiments of the present invention and, together with the description, serve to explain the principles of the invention. The drawings are only for the purpose of illustrating a preferred embodiment of the invention and are not to be construed as limiting the invention. In the drawings:
Fig. 1 is a graph of a sensor response curve of the invention of Fig. 2;
Fig. 2 is a side view of the elevated grounded gap between electrodes embodiment of the invention;
Fig. 3 illustrates the convex adjacent electrode capacitive sensor of the invention;
Fig. 4 illustrates the capacitive sensor array installed on an instrument panel;
Fig. 5 illustrates the multiple "L" electrode configuration of the invention used around an airbag door;
Fig. 6 illustrates nesting of capacitive sensors for efficient manufacturing;
Fig. 7 illustrates the daisy-chaining of the application-specific integrated circuits (ASICs) of the invention;
Fig. 8 is a table of sensor readings and concomitant preferred airbag responses for a sensor set as in Fig. 5;
Fig. 9(a) illustrates a capacitive sensor in a roof support;
Fig. 9(b) is a cross-section view of the roof-support capacitive sensor of Fig. 9(a);
Fig. 10 illustrates a capacitive sensor in a stowed sunvisor;
Fig. 11(a) illustrates the capacitive sensor of Fig. 10 when the sunvisor is angled vertically;
Fig. 11 (b) illustrates the capacitive sensor of Fig. 10 when the sunvisor is angled forward;
Fig. 12 is a plan view of the capacitive sensor of Fig. 10;
Fig. 13 illustrates a partial circle or ellipse (arc) receive electrode capacitive sensor array;
Fig. 14 illustrates multiple drive and receive electrodes deployed in a steering wheel;
Figs. 15(a) and (b) illustrate wire electrodes in a glass laminate (cross-section and front views);
Fig. 16 illustrates embedded electrodes in a trimpiece;
Fig. 17 illustrates a moisture evaporator and capacitive sensor;
Fig. 18 illustrates an electrode design of the invention for an airbag door;
Fig. 19 is a graph of output from multiple signal processing channels;
Fig. 20 illustrates an additional embodiment of a capacitive sensor in a front windshield;
Fig. 21 illustrates two sensors of Fig. 20 with a common connection to a grounded conductive film;
Fig. 22 illustrates using angle of approach to discriminate an occupant's head and hands; and
Figs. 23(a) and (b) illustrate the attachment of sensor electronics to the windshield embodiment of Figs. 20-22 (side cutaway and plan views).

### DESCRIPTION OF THE PREFERRED EMBODIMENTS

### (BEST MODES FOR CARRYING OUT THE INVENTION)

The present invention presents sensing apparatuses and methods providing manners in which varying vehicle geometries and environmental conditions may be provided for. For example, sensors surrounding airbag doors, within windshields, within sunvisors, within trimpieces, and handling moisture infiltration are provided.

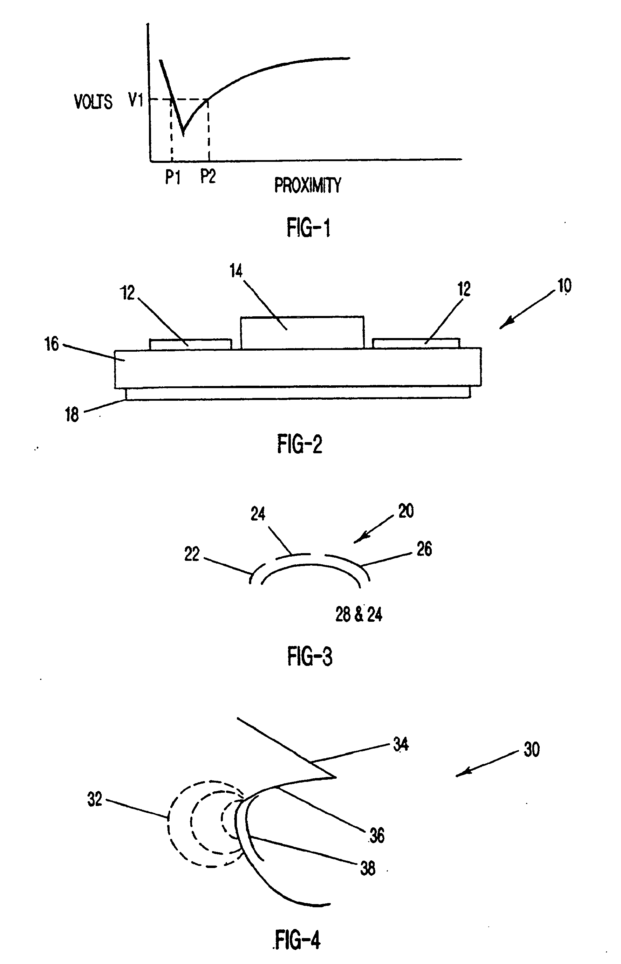

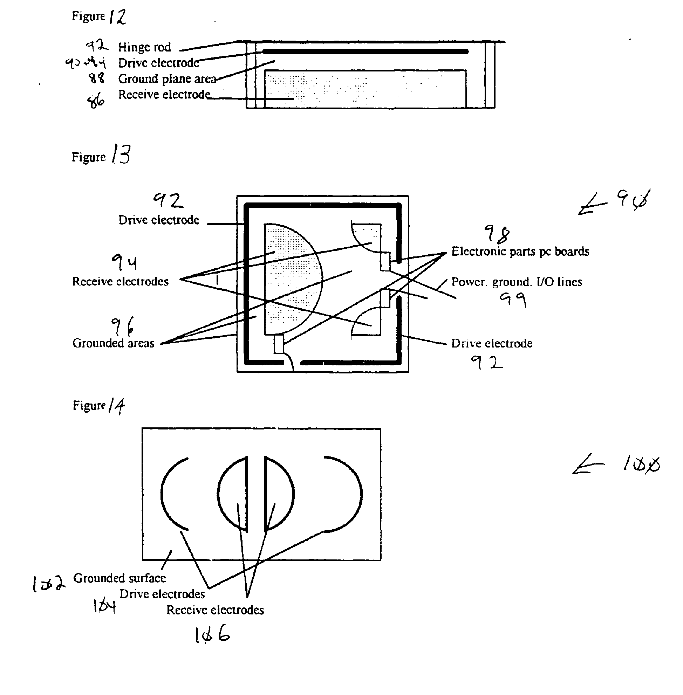

Referring to Figs. 1-2, the present invention relates to design, construction, and assembly of an adjacent electrode capacitive sensor **10**, and to its several useful applications. The response curve of this sensor exhibits a capacitive decay function as disclosed in Fig. 13 of Application No. PCT/US97/06822. It has been determined that an ungrounded object whose dimensions exceed the electrode spacing, when positioned closer than 1 "-2" to the face of the sensor, cause a sharp reversal of the response curve. Rather than a continued decrease in voltage as the object enters this very near zone, the voltage increases dramatically. This response is depicted in Fig. 1.

This reversal may cause ambiguity in some sensing applications, as the proximity of an object could be either of two values. This reversal can be alleviated either by grounding the object, or by elevating the grounded gap between the electrodes. This grounded planar elevated element **14** introduced between the electrodes **12** on dielectric substrate **16** having monolithic grounded backplane **18** has the effect of shunting to ground the very strong capacitive coupling existing directly between the electrodes, which is thought to be the primary cause of signal reversal at near range. The elevated grounded gap is shown in Fig. 2.

The effective sensing range of this adjacent electrode capacitive sensor is generally a function of electrode geometry. The range can be increased by introducing a convex curavture to the substrate **28** on which the electrodes are formed, and grounded backplane **29** and gap **24** between drive electrode **22** and receive electrode **26**. This improvement **20** in sensor range can be achieved for a single sensor or can be fabricated in an array of sensors, as shown in Fig. 3.

The present invention is particularly useful for vehicle occupant sensing, particularly to determine occupant position for airbag systems, for detecting operator drowsiness, for adjusting seat and headrest automatically, and to adjust the viewing angle of side and center mirrors based on driver head position, and other safety and convenience applications.

As new vehicles are increasingly equipped with dual front airbag systems, it is critically important to separately determine each front occupant's position with respect to his/her airbag system, because each occupant will likely experience different kinematics from the crash forces if an accident occurs. One means of accomplishing this is to equip the seating positions with separate occupant sensing systems which continuously convey information about each occupant's position to the airbag controller. To achieve this requirement, separate arrays of capacitive or other occupant detection sensors can be installed proximate each seating position. The supporting electronics most efficiently can use multiplexing techniques and devices to monitor each occupant's position, or this can be accomplished with separate systems. While it is preferred that each array comprise roof-mounted capacitive sensors constructed with adjacent electrodes and grounded gap and backplane, with all sensors driven by a single oscillator, it is equally feasible to employ sensors distributed elsewhere in the vehicle, proximate to each occupant's seating position. Likewise, one or more types of occupant sensors may be employed, such as capacitive and weight, infrared and capacitive, ultrasound and capacitive, infrared and ultrasound, ultrasound and weight, and similar combinations.

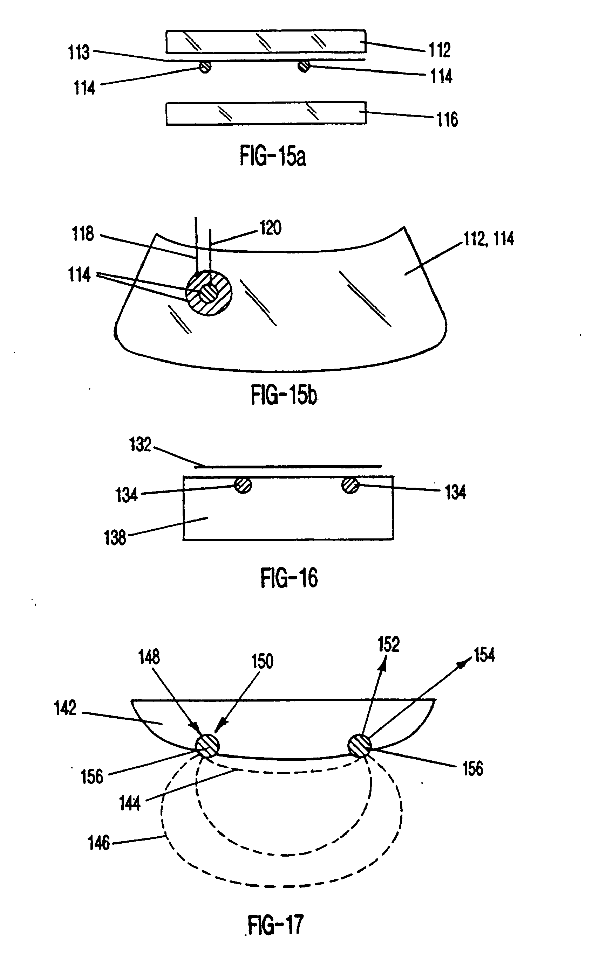

Referring to Figs. 4-5, the present invention is also of an array of sensors arranged around the perimeter of an airbag door **44**. The invention **30** is particularly useful when installed on the instrument panel or dashboard **36** beneath windshield **34** of a vehicle, with the sensing fields **32** generally extending horizontally towards the passenger seat from the capacitive sensor array **38**. Preferably, the sensors are excited by a single oscillator attached to a drive electrode, similar to Fig. 15 of Application No. PCT/US97/06822. Preferably, the airbag door is encompassed by four receive electrodes **48**. The gap between the drive **46** and receive electrodes and the opposite surface of the substrate **42** are both connected to vehicle ground. In an alternative configuration, fewer than four receive electrodes may be employed, arranged above and below the airbag door and/or to either side. In either configuration, the sensors can be physically located on the airbag door itself, or immediately adjacent to the airbag door.

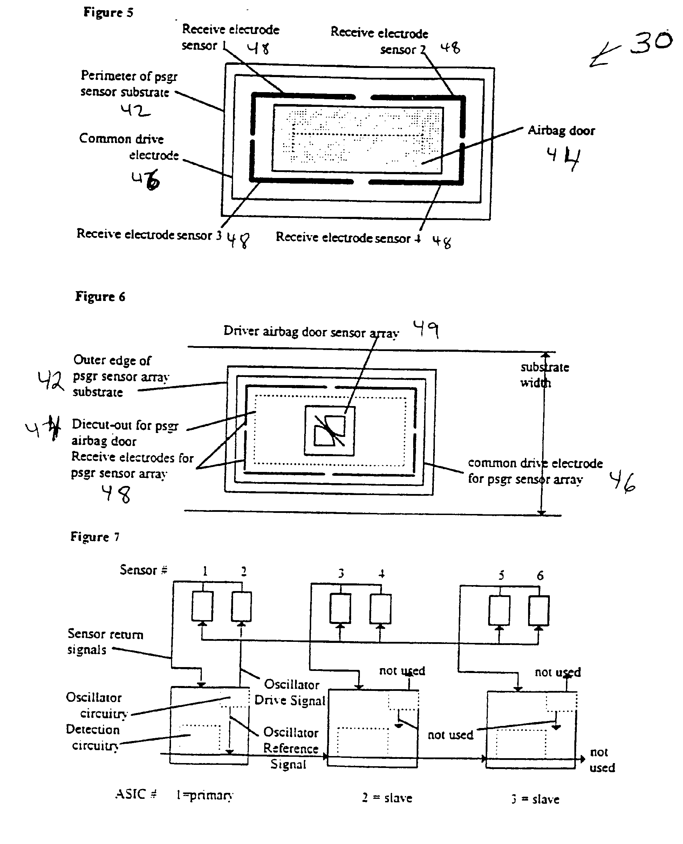

Manufacturing can be accomplished by combination with other like products, such as additional driver airbag sensors described herein, e.g., that depicted in Fig. 14. During the manufacturing process of implementing the electrodes and grounded areas on both sides of the dielectric substrate, a driver's airbag door sensor **49** may be nested inside of the passenger airbag door sensor **30** (which is preferred), to accomplish manufacturing efficiency and product consistency, as shown in Fig. 6.

With the likelihood that multiple sensing arrays will be employed in a vehicle to sense both driver and passenger positions relative to their respective airbags, it is desired to minimize the supporting electronics to improve reliability. The present invention preferably employs an application-specific integrated circuit (ASIC) designed to support two capacitive occupant sensor arrays of the invention. The ASIC is preferably configured to be daisy-chained so that multiple ASIC devices can be used in combination to support multiple pairs of sensor arrays. To achieve this configuration, the oscillator circuit internal to the ASIC is conveyed to two pin-outs on the ASIC, one of which is connected to one or more sensor drive electrodes and one of which may be connected to a reference input pin on a second ASIC, as shown in Fig. 7.

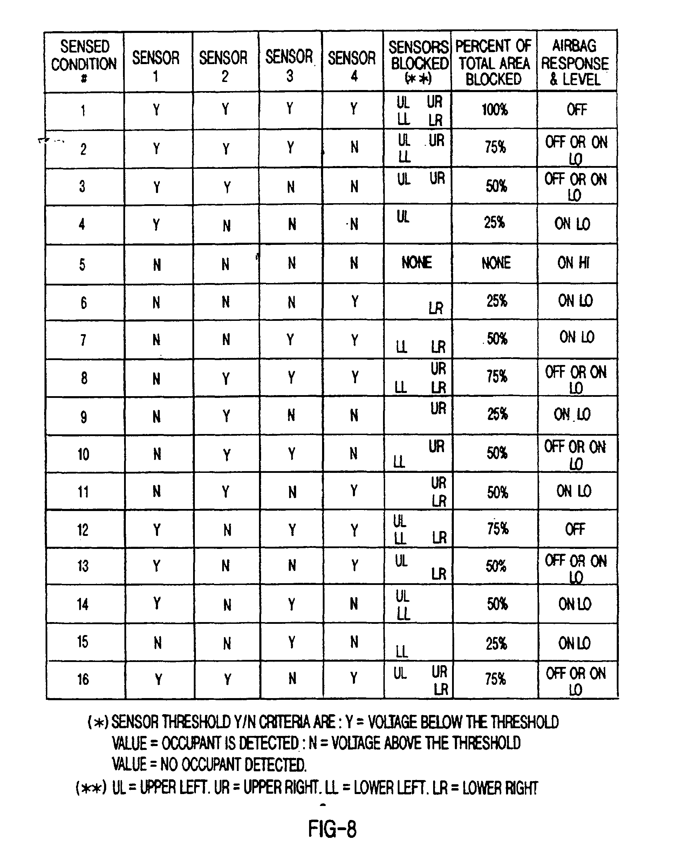

The challenge of occupant sensing for passenger airbag systems is to prevent airbag deployment when a child or out-of-position occupant is adjacent the airbag, a condition likely to result in serious injury from an airbag deployment. By reference to the differing response of the four sensors, it is possible to discriminate many deployment conditions from non-deployment conditions. For example, the proximity of an adult's knees near the airbag door is unlikely to cause injury, whereas the presence of a child's head in approximately the same position could result in fatal brain injuries. A table of sensor responses in the form of voltage output below (Y=occupant is detected) or above (N=no occupant is detected), a threshold value, and probable airbag response condition is shown in Fig. 8.

As the styling of vehicles becomes more aerodynamic, the roof area is reduced while front glass area is expanded. Therefore, in many vehicles a roof mounted capacitive sensor is not possible or, even if mechanically possible, the sensor is not immediately above the seating position. Therefore, the present invention provides a solution to either adapt the capacitive sensor for positioning in vehicle interior parts other than the roof or to provide a roof sensing system which has extended sensing range to overcome limitations of vehicle roof geometry.

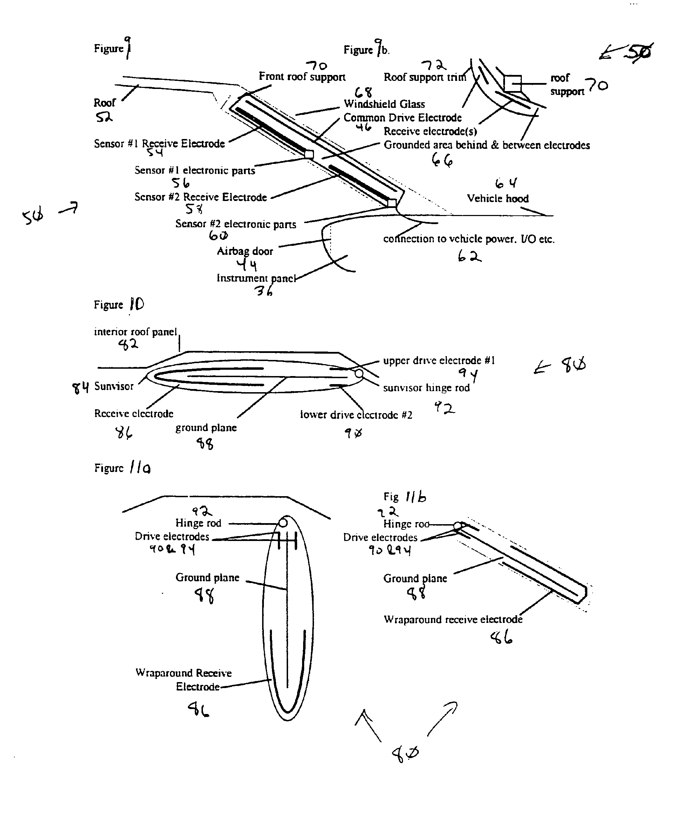

Application No. PCT/US97/06822 discloses (page 2, line 9) a dual adjacent electrode capacitive sensor positioned on the roof support to detect occupant presence and/or position, used in combination with one or more other like sensors positioned elsewhere in the vehicle. One embodiment of the present invention employs one or more such sensors on the roof support **70**, which operate individually and apart from other sensors located in the vehicle interior. If two or more sensors are fitted to the roof support, each may be driven by a common oscillator to provide overlapping sensing fields. The differential response as a person enters the two or more sensing fields provides more information than a single capacitive sensor on the roof support, particularly in regard to body mass, position, direction of motion, and relative risk to the person from adjacent airbag systems. While one design **50** of multiple sensors positioned on a front roof support is depicted in Figs. 9(a)-(b), comprising roof **52**, first sensor receive electrode **54**, first sensor electronic components **56**, second sensor receive electrode **58**, second sensor electronic components **60**, connection to vehicle power and input/output **62**, vehicle hood **64**, grounded area **66** behind and between electrodes, windshield glass **68**, and roof support trim **72**, an embodiment of a single sensor positioned on a front roof support is also possible. In this case, the two receive electrodes would be replaced with a single receive electrode.

To accomplish the function of detecting a driver's proximity to the airbag located in a steering wheel, Application No. PCT/US97/06822 disclosed employing a dual adjacent electrode capacitive sensor inside the driver's airbag door. Two or more sensors can be employed **90** in this location to provide differential voltages according to proximity of the driver's body, head, hands, and/or arms, as shown in Fig. 14, with grounded surface **102**, drive electrodes **104**, and receive electrodes **106**.

Alternatively, for either driver or passenger, or both, a capacitive sensor can be fitted to the sunvisor, constructed to operate whether or nor the sunvisor is stowed against the roof, or positioned at a downward angle to block reflection and glare. In this construction, it is preferred to either employ multiple sensors, each located on a surface of the sunvisor, to utilize one drive electrode and multiple receive electrodes, or multiple drive electrodes and one receive electrode. In the latter two embodiments, the multiple (drive or receive, as the case may be) electrodes are positioned so that one or more are activated based on the sunvisor angle.

In the instance **80** of multiple drive electrodes and a single receive electrode with ground plane **88**, as shown in Figs. 10-12, when the sunvisor **84** is stowed in interior roof panel **82**, the upper drive electrode **94** is off, preventing desensitization of the sensor by the proximity of the metal roof. In this stowed position, the lower drive electrode **90** is active and couples to the receive electrode **86**. Alternatively, when the sunvisor is in a vertical "down" position, both drive electrodes are active to provide maximum signal coupling and greatest extent of sensing fields toward the airbag module. When the sunvisor is angled forward against the windshield, the upper drive electrode becomes active and the lower drive electrode is turned off. This prevents signal from coupling through the windshield where a false response could be caused by rain or snow on the windshield surface. It is preferred that the receive electrode encompass both surfaces of the sunvisor so that signal is always received regardless of which drive electrode is active. In many sunvisors, a mirror is positioned on the upper surface. The capacitive sensor receive electrode may be formed to surround the mirror or may be electrically attached to the mirror metalized reflective layer, thus integrating the mirror within the receive electrode.

The tinted film embedded in the glass area may be utilized as one or more elements of the capacitive sensor. In a first application, the film can be made of a transparent or translucent conductive membrane which is connected to the vehicle ground, forming a ground plane to isolate the sensing fields of the roof support or sunvisor sensor, from rain or snow on the outside surface of the glass. Thus, any change in capacitance between the drive and receive electrodes can be attributed to interference in capacitive coupling caused by proximity of a person or other conductive object inside the vehicle. Optionally, the sensor drive and receive electrodes can be formed on the conductive membrane within the vehicle glass, with a separate conductive membrane ground plane overlying the drive and receive electrodes. This variation of the capacitive occupant sensor provides the capability to detect proximity of a person or object adjacent the interior vehicle glass.

The present invention is also of an extended-range sensor design **90** for installation in the interior roof to overcome limitations of vehicle roof geometry. The receive electrodes **94** comprise a partial circle or ellipse, with an adjacent drive electrode **92** providing signal which capacitively couples to the receive electrode. One configuration of an array of said partial circle or ellipse receive electrodes is shown in Fig. 13. In this embodiment, the drive electrode is positioned around the perimeter of the array of receive electrodes, with grounded areas **96** separating the electrodes. Electronic parts **98** are adhered and electrically connected to each receive electrode, with power, ground, and input/output lines **99** as shown.

Referring to Figs. 15(a) and (b), electrodes **114** may be formed of insulated conductors, preferably of very small cross-section, and positioned directly on a conductive membrane or coating **114** formed on one interior surface of a laminated glass structure **112, 116** such as a vehicle windshield. One such electrode is driven by an oscillator signal **120** and one other such electrode is connected to a signal processing device which converts the capacitive coupling caused to exist between the electrodes into a voltage signal. The voltage signal is processed to determine if the capacitive coupling between the electrodes is partially or entirely blocked by a highly conductive object such as a person. The blocking effect occurs due to shunting of some portion of the capacitive coupling fields. The blocking of capacitive fields correlates to proximity of the person to the glass structure.

In a vehicle airbag system located on the dashboard proximate to the windshield glass, the described invention may be used to detect proximity of the occupant to the airbag door, which proximity information may be utilized by the airbag controller to disable the airbag if an occupant is very close to the airbag door. The proximity information alternatively can be used to modify the airbag deployment parameters.

Alternatively, signals from one or more glass embedded capacitive sensors may be combined with signals from other nearby sensors located in the dashboard, airbag door, a pillar, roof, sunvisor, or seat to provide additional information about the position, velocity, or acceleration of the occupant. For example, U.S. Patent Nos. 5,602,734 and 5,691,693 disclose a process of triangulating occupant head position by reference to the output of three capacitive coupling sensors located in the vehicle headliner. The triangulation method can be modified to incorporate data from one or more sensors located in the headliner and one or more other sensors located in the front windshield, it being understood that data from a least three sensors is needed to perform the triangulation process and obtain three coordinate points for the occupant's head. Optionally, U.S. Patent Application Serial No. 08/621,465 discloses the use of data from two capacitive sensors in the roof headliner to obtain two coordinate points of the occupant's head, and so two sensors according to the present invention may be employed. Furthermore, other types of sensors may be used in combination, including ultrasound, active or passive infrared, weight, radar, and other similar proximity or mass sensing devices.

The invention is further of a method of embedding electrodes in a molded or composite material such as an airbag door, vehicle instrument panel, roof support trimpiece, roof headliner, or the like. In one embodiment, the electrodes, which are formed of wires or other conductive material, are embedded in the back surface of the molded/composite material. The electrodes stub out to an integrated circuit or other electronic components which may be mounted on a small printed circuit board. A conductive material is applied over the back surface containing the embedded electrode, which conductive material is connected to vehicle ground. This isolates the electrodes so that the capacitive fields are formed only through the molded/composite material, i.e., the fields extend toward the interior of the passenger compartment for the purpose of sensing proximity of an occupant located therein. The conductive material **132** may be applied in a liquid or spray form, printed on the back side of the molded/composite piece **138**, or similar application method, as shown in Fig. 16. Alternatively, the electrodes **134** may be embedded in the middle of , close to, or on the front surface of the molded component, with the electrode stub-outs, circuit board, and ground plane positioning either remaining in a similar location as described, or being appropriately re-located according to location of the electrodes.

The invention is further comprised of constructing electrodes in a molded or composite material **142** so that the electrodes lie adjacent to the front surface of the material. In this embodiment, a small DC voltage **148** may be applied to one electrode **156** so that in the presence of overlying or embedded moisture, the moisture causes a conductive path **144** for current flow to the second electrode **156**. The current flow creates heat which evaporates the moisture which in turn reduces the conductive path, causing the current flow to diminish and eventually cease when sufficient moisture has evaporated. The electrodes are also employed to form a capacitive sensor **146** for detecting proximity of an occupant in close proximity to the molded or composite material. To achieve capacitive coupling between the electrodes, an AC oscillator signal **150** is connected to one electrode and signal processing circuitry is attached **154** to the second electrode. A conductive material may be integrated into the material, immediately behind the electrodes, or may be applied to the back surface of the molded/composite material. The conductive material is connected **152** to vehicle ground, thereby forming a grounded backplane, as shown in Fig. 17. Alternatively, the surface of the molded/composite material **142** may be constructed of or contain a moisture-activated material which becomes conductive when sufficient moisture accumulates. As an example of such a material, stabilized salt-additives provide added conductivity in the presence of moisture.

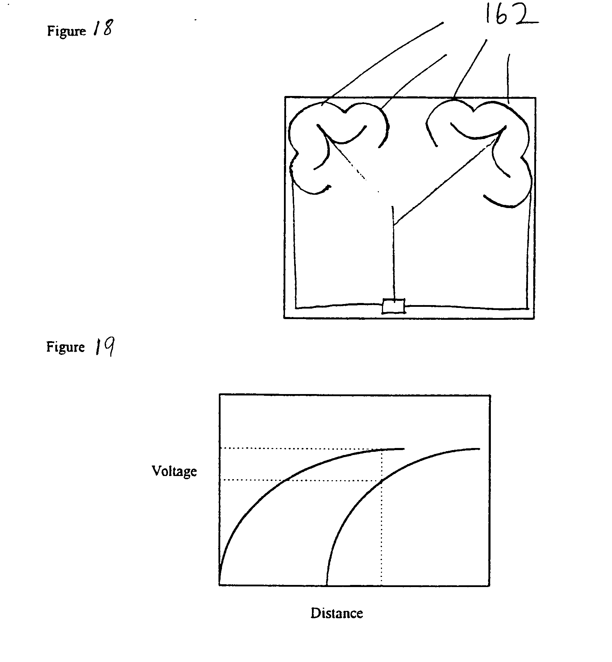

The invention is also of multiple electrodes formed from insulated wire or other conductive material which are semi-circular in shape. Preferably, each semi-circular shape **162** is adjacent to a corner of a polygon, such as a vehicle airbag door. A second electrode is formed to nest inside each of the semi-circular electrodes in a manner such that a common distance is formed between the second electrode and each of the semi-circular electrodes. The sets of semi-circular electrodes and the nested inner electrode both stub out to an integrated circuit or to other electronic components, such as on a printed circuit board. A conductive material may be applied to the rectangular area or vehicle airbag door and connected to vehicle ground to form a groundplane behind the electrodes, as shown in Fig. 18.

U.S. Patent No. 5,691,693 discloses a capacitive occupant sensing system installed in the vehicle headliner to detect head position and a processor which compares changes in head position over time to further detect conditions of impairment such as vehicle operator drowsiness. The processing circuitry in the system preferably employs multiple gain stages so that head position of tall versus short drivers can be determined with equal precision. In the present invention, the multiple gain stages may be performed by multiple synchronous detection processing stages each of which employs different gain elements. The multiple stages of the invention are used to provide optimum resolution for the capacitive sensors. The output of two synchronous detection processing stages is illustrated in Fig. 19. Alternatively, the multiple gain stages may be accomplished with logarithmic amplifiers.

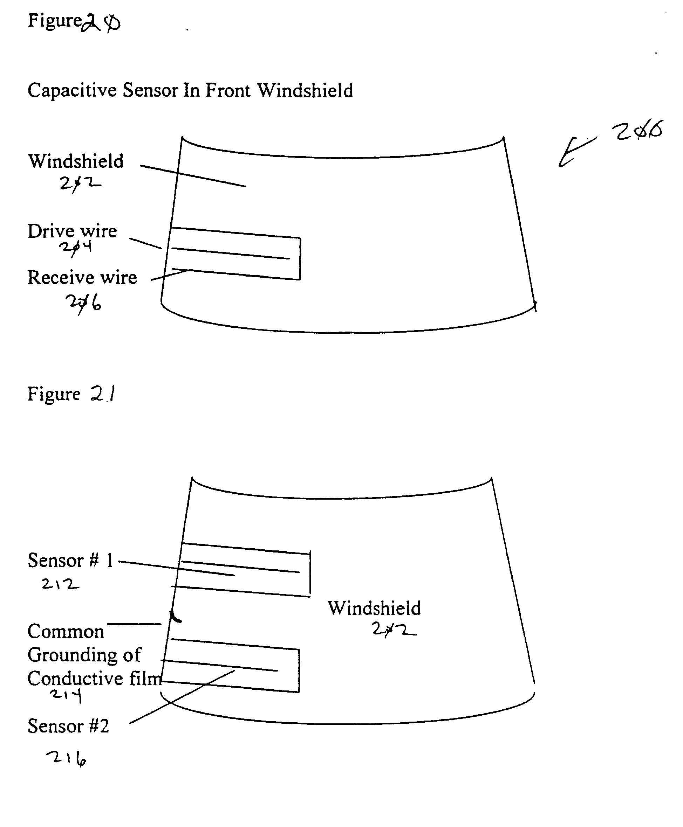

Referring to Figs. 20-23, an additional capacitive sensor **200** embedded in glass is further described. The sensor consists of wires **204** and **206** positioned in a dielectric material (such as a windshield **202**) which is placed against a conductive material **214** formed on a surface of glass or similar transparent or translucent material.

In one embodiment, one wire is attached to a driving means such as an oscillator device, and another wire is attached to a receiving means such as a charge sensitive amplifier, and the conductive material is attached to system ground. A capacitive coupling is formed between the driving wire and the receiving wire, which coupling varies in response to the proximity of a conductive object such as a person. In a further embodiment, the driving wire **204** is embedded horizontally across a portion of the glass surface forming a vehicle front windshield **202**, and the receiving wire **206** is embedded in an elongated U shape surrounding the driving wire, as depicted in Fig. 20. A second set **212** of similar wires may be embedded parallel to the first set **216** of wires, as shown in Fig. 21. In this embodiment, a single connection of the conductive membrane **214** to system ground is sufficient for both sets of wires.

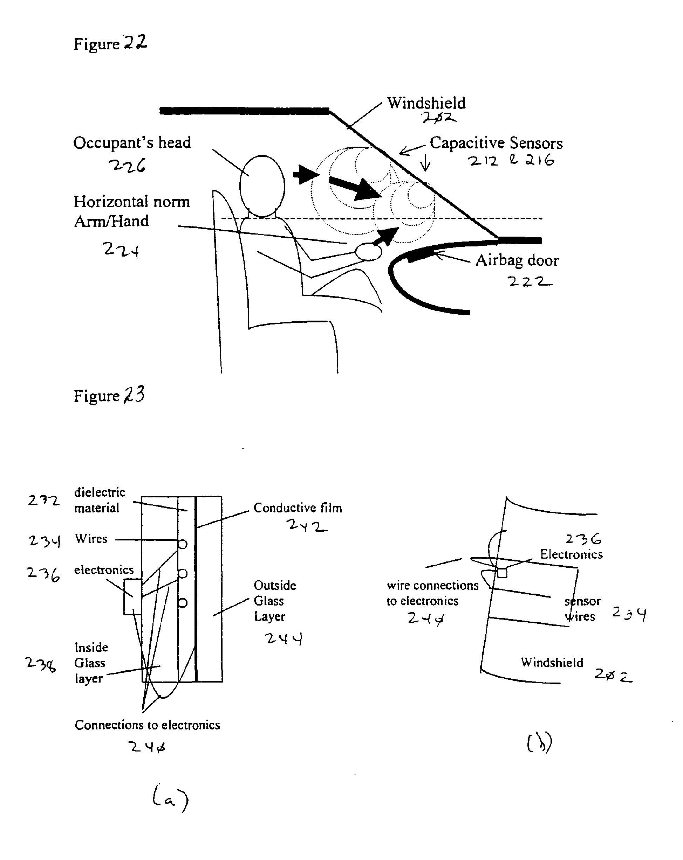

In a vehicle occupant sensing system, capacitive coupling resulting from proximity of an occupant to each of the two sets **212,216** of wires may be logically combined to determine the relative fore-aft and up-down positions of the occupant. These positions can be tracked over time to provide an angle of approach of the occupant, the angle being stated relative to a norm such as horizontal. See Fig. 22. Discrimination of an occupant's head **226** versus hands or limbs **224** entering the sensing zone may be determined by reference to the variation of the angle of approach from the norm. An approach angle from above the norm can be interpreted as an occupant's head, and an approach angle from below the norm can be interpreted as movement of an occupants limbs or hands into the sensing zone. Additionally or optionally, discrimination may be accomplished by computing position versus time of the occupant entering one or more sensing fields. It is assumed that a crash condition which requires airbag restraint will generate greater change in position per unit of time than voluntary movement of an occupant's head or hands. Additionally or optionally, discrimination of the occupant's head vs. hands can utilize logical operations on voltage thresholds to determine which combination of sensing fields the occupant is occupying at a given moment in time. A combination indicating the occupied zone is closer to the upper portion of the windshield may be construed as an occupant's head, whereas an occupied zone located closer to the lower portion of the windshield may be construed as the occupant's hands or knees. This approach is analogous to the logic depicted in Fig. 22 of U.S. Patent Application Serial No. 08/621,465.

This discrimination data can be utilized by a vehicle safety system such as the passenger airbag system, to determine an appropriate deployment condition for the airbag **222**. If the discrimination data indicates an occupant's head is entering the region adjacent the airbag and possibly in the path of deployment, the airbag logical controller may select a low power or off condition to reduce injuries from the airbag. If the discrimination data indicates an occupant's limbs are entering the region adjacent to the airbag, the controller may select a normal deployment condition. Output from the capacitive sensing device or system described above may be combined with a variety of other sensing devices located elsewhere in the vehicle, such as capacitive, ultrasound, infrared, weight, seat position, child seat detection means, radar, etc., to optimize the safety system response for all conditions of seat occupancy.

Fabrication of the capacitive sensor of Figs. 20-22 may be accomplished by attaching a small electronic circuit **236** directly on the inside glass **238** surface nearby to the wire **234** exit point at the edge of the glass. See Figs. 23(a) and (b), additionally showing dielectric material **232**, electronic connections **240**, conductive film **242**, and outside glass layer **244**. To isolate the circuit from moisture, condensation, and other foreign matter, the circuit can be covered with a potting compound such as epoxy or plastic. Electronic isolation of this circuit can be achieved by surrounding the top and sides of the circuit with a conductive material which is electrically connected to system ground. This embodiment can be constructed and employed in many equivalent configurations without limitation including the following: the wires may be connected to different types of electronic devices, which create the capacitive fields or which allow for detection of changes in the fields; the wires may be formed of flat, round or other shapes of conductive material; the conductive material may be metallic or nonmetallic; the conductive material which is attached to system ground may be physically bonded to the glass or other transparent/translucent surface, or may be attached to a pliable membrane which is bonded to the glass; the orientation of the wires may be conveniently selected according to sensing requirements, and one set of wires may be offset from a second set of wires; multiple angles of approach, position vs. time thresholds, or voltage/zone positions may be utilized to refine the discrimination capabilities; more than two sets of wires may be utilized, and triangulation algorithms employed to locate the occupant's position in three axes; and the electronic circuit may be placed remotely from the edge of the glass, preferably by shielding the wires at the exit point on the glass edge.

## Claims

1. A passenger sensing system comprising a plurality of capacitive sensors (10) to be positioned proximate an airbag door, each said sensor (10) comprising adjacent drive (46) and receive electrodes (48) and a grounded planar element (29), each said sensor (10) providing a signal corresponding to occupant proximity, and means for comparing said signals, **characterized in that** the drive (46) and receive electrodes (48) are co-planar to the grounded planar element (29) which lays between the drive (46) and receive electrodes (48).

2. The passenger sensing system of claim 1 wherein said means for comparing comprise means for determining a percentage of signals exceeding one or more predetermined thresholds, and optionally wherein said means for comparing comprise means for determining an occupant characteristic selected from the group consisting of acceleration, velocity, two-dimensional position, three-dimensional position, and combinations thereof.

3. A sensor **characterized in that** a plurality of electrodes (48) formed on a dielectric substrate (16) and separated by a grounded area configured to block line-of-sight between each of said electrodes (48).

4. A sensor according to any one of claims 1 and 3, comprising drive (46) and receive electrodes (48) comprising conductive material attached to a vehicle dielectric material comprising a conductive coating on one surface and a grounded planar element (29) between said drive (46) and receive electrodes (48).

5. A sensor according to any one of claims 1 and 3, comprising supporting electronics for a plurality of capacitive sensors (10) and means for providing oscillator output to a second integrated circuit.

6. A sensor according to any one of claims 1 and 3. comprising drive (46) and receive electrodes (48) embedded within a vehicle trimpiece and adjacent to a conductive material connected to ground and a grounded planar element (29) between said drive (46) and receive electrodes (48).

7. The sensor of claim 6 additionally comprising means for applying a DC voltage to one electrode to form a conductive path to a second electrode, said conductive path comprising moisture.

8. A capacitive sensor according to claim 1, comprising a drive (46) and a receive electrodes (48), **characterized in that** said electrodes (48) are formed integrally with a vehicle window and wherein said electrodes are adjacent and co-planar.

9. The capacitive sensor of claim 8 wherein one of said electrodes is formed into a U-shape surrounding the other of said electrodes.

10. The capacitive sensor of claim 8 wherein said sensor comprises a plurality of pairs of drive (46) and receive electrodes (48).

11. A capacitive sensor according to claim 8, wherein at least one of said electrodes is formed into a U-shape surrounding another of said electrodes.

12. A capacitive sensor according to claim 8, comprising a plurality of pairs of drive (46) and receive electrodes (48).

13. A capacitive sensor according to claim 8, wherein said electrodes comprise wires.

14. The capacitive sensor of claim 13 wherein said wires are embedded in a dielectric material.

15. The capacitive sensor of claim 13 wherein said wires are overlain by a conductive file connected to ground.

16. The sensor of claim 6 wherein said electrodes are embedded in a back surface of said trim piece.

17. The sensor of claim 6 wherein said conductive material is applied over a back surface of said trim piece.

18. The sensor of claim 17 wherein said conductive material has been applied in liquid or spray form to said back surface.

19. The sensor of claim 6 wherein said electrodes are embedded in a front surface of said trim piece.

20. The sensor of claim 19 additionally comprising means to apply a voltage to one of said electrodes in the presence of moisture embedded in or overlaying said trim piece.

21. The system of claim 1, wherein the capacitive sensors are positioned proximate an airbag door.

22. The sensor of claim 3, wherein the substrate is convex.

## Patentansprüche

1. Passagiererfassungssystem mit einer Mehrzahl von kapazitiven Sensoren (10), welche nahe einer Airbagklappe positionierbar sind, wobei jeder Sensor (10) benachbarte Antriebs(46)- und Empfangs-Elektroden (48) und ein auf Masse gelegtes planares Element (29) aufweist, wobei jeder Sensor (10) ein Signal entsprechend der Nähe eines Insassen erzeugt, und mit einer Einrichtung zum Vergleichen der Signale, **dadurch gekennzeichnet, dass** die Antriebs(46)- und Empfangs-Elektroden (48) koplanar mit dem auf Masse gelegten planaren Element (29) sind, welches zwischen den Antriebs(46)- und Empfangs-Elektroden (48) liegt.

2. Passagiererfassungssystem nach Anspruch 1, wobei die Einrichtung zum Vergleichen eine Einrichtung zum Bestimmen eines Prozentsatzes von Signalen, welche eine oder mehrere vorbestimmte Schwellwerte übersteigen, aufweist, und wobei optional die Einrichtung zum Vergleichen einer Einrichtung zum Bestimmen einer Charakteristik des Insassen aufweist, welche aus folgender Gruppe ausgewählt ist: Beschleunigung, Geschwindigkeit, zweidimensionale Position, dreidimensionale Position und Kombinationen davon.

3. Sensor, **dadurch gekennzeichnet, dass** eine Mehrzahl von Elektroden (48), welche auf einem dielektrischen Substrat (16) gebildet sind und durch einen auf Masse gelegten Bereich getrennt sind, konfiguriert ist, eine Sichtlinie zwischen jeder der Elektroden (48) zu blockieren.

4. Sensor nach einem der Ansprüche 1 und 3 mit Antriebs(46)- und Empfangs-Elektroden (48), welche ein leitendes Material angebracht an einem dielektrischen Material des Fahrzeugs aufweisen, mit einer leitfähigen Beschichtung auf einer Oberfläche und einem auf Masse gelegten planaren Element (29) zwischen den Antriebes(46)- und Empfangs-Elektroden (48).

5. Sensor nach einem der Ansprüche 1 und 3 mit einer Unterstützungselektronik für eine Mehrzahl von kapazitiven Sensoren (10) und einer Einrichtung zum Liefern einer Oszillatorausgabe an eine zweite integrierte Schaltung.

6. Sensor nach einem der Ansprüche 1 und 3 mit Antriebs(46)- und Empfangs-Elektroden (48), welche eingebettet sind in ein Fahrzeugverkleidungsteil und neben einem leitfähigen Material, welches auf Masse gelegt ist, und mit einem auf Masse gelegten planaren Element (29) zwischen den Antriebs(46)- und Empfangs-Elektroden (48).

7. Sensor nach Anspruch 6, weiterhin aufweisend eine Einrichtung zum Anlegen einer Gleichspannung an einer der Elektroden zum Bilden eines leitenden Pfades zu einer zweiten Elektrode, wobei der leitfähige Pfad Feuchtigkeit aufweist.

8. Kapazitiver Sensor nach Anspruch 1 mit Antriebs(46)- und Empfangs-Elektroden (48), **dadurch gekennzeichnet, dass** die Elektroden (48) einteilig mit einem Fahrzeugfenster ausgebildet sind, wobei die Elektroden benachbart und koplanar sind.

9. Kapazitiver Sensor nach Anspruch 8, wobei eine der Elektroden in U-Gestalt derart ausgebildet ist, dass sie die andere der Elektroden umgibt.

10. Kapazitiver Sensor nach Anspruch 8, wobei der Sensor eine Mehrzahl von Paaren von Antriebs(46)- und Empfangs-Elektroden (48) aufweist.

11. Kapazitiver Sensor nach Anspruch 8, wobei zumindest eine der Elektroden in U-Gestalt derart ausgebildet ist, dass sie eine andere der Elektroden umgibt.

12. Kapazitiver Sensor nach Anspruch 8 mit einer Vielzahl von Paaren von Antriebes(46)- und Empfangs-Elektroden (48).

13. Kapazitiver Sensor nach Anspruch 8, wobei die Elektroden Drähte aufweisen.

14. Kapazitiver Sensor nach Anspruch 13, wobei die Drähte in ein dielektrisches Material eingebettet sind.

15. Kapazitiver Sensor nach Anspruch 13, wobei die Drähte überlagert sind durch einen leitenden Hefter, der mit Masse verbunden ist.

16. Sensor nach Anspruch 6, wobei die Elektroden in eine rückseitige Oberfläche des Verkleidungsteils eingebettet sind.

17. Sensor nach Anspruch 6, wobei das leitende Material über eine rückseitige Oberfläche des Verkleidungsteils angebracht ist.

18. Sensor nach Anspruch 17, wobei das leitende Material in Flüssigform oder Sprayform auf die rückseitige Oberfläche aufgebracht ist.

19. Sensor nach Anspruch 6, wobei die Elektroden in eine vorderseitige Oberfläche des Verkleidungsteils eingebettet sind.

20. Sensor nach Anspruch 19, weiterhin aufweisend eine Einrichtung zum Anlegen einer Spannung an eine der Elektroden in Gegenwart von Feuchtigkeit, eingebettet in oder überlagernd das Verkleidungsteils.

21. System nach Anspruch 1, wobei die kapazitiven Sensoren nahe einer Airbagklappe positioniert sind.

22. Sensor nach Anspruch 3, wobei das Substrat konvex ist.

## Revendications

1. Système de détection de passager comprenant une pluralité de capteurs capacitifs (10) à positionner à proximité d'une porte à coussin de sécurité gonflable, chacun desdits capteurs (10) comprenant des électrodes adjacentes de commande (46) et de réception (48) et un élément planaire mis à la terre (29), chacun desdits capteurs (10) fournissant un signal correspondant à la proximité d'un occupant, et des moyens pour comparer lesdits signaux, **caractérisé en ce que** les électrodes de commande (46) et de réception (48) sont coplanaires par rapport à l'élément planaire mis à la terre (29) qui se trouve entre les électrodes de commande (46) et de réception (48).

2. Système de détection de passager selon la revendication 1, dans lequel lesdits moyens de comparaison comprennent des moyens de détermination d'un pourcentage de signaux dépassant un ou plusieurs seuil(s) prédéterminé(s), et, optionnellement, dans lequel lesdits moyens de comparaison comprennent des moyens pour déterminer une caractéristique d'occupant choisie dans le groupe consistant en une accélération, une vitesse, une position bidimensionnelle, une position tridimensionnelle, et des combinaisons de celles-ci.

3. Capteur **caractérisé en ce qu'**une pluralité d'électrodes (48) est formée sur un substrat diélectrique (16) et séparée par une zone mise à la terre configurée pour bloquer la ligne de visée entre chacune desdites électrodes (48).

4. Capteur selon l'une quelconque des revendications 1 et 3, comprenant des électrodes de commandé (46) et de réception (48) comprenant un matériau conducteur rattaché à un matériau diélectrique de véhicule comprenant un revêtement conducteur sur une surface et un élément planaire mis à la terre (29) entre lesdites électrodes de commande (46) et de réception (48).

5. Capteur selon l'une quelconque des revendications 1 et 3, comprenant de l'électronique de support pour une pluralité de capteurs capacitifs (10) et des moyens de fourniture d'une sortie d'oscillateur à un second circuit intégré.

6. Capteur selon l'une quelconque des revendications 1 et 3, comprenant des électrodes de commande (46) et de réception (48) intégrées à l'intérieur d'une pièce de garniture de véhicule et adjacentes à un matériau conducteur relié à la terre, et un élément planaire mis à la terre (29) entre lesdites électrodes de commande (46) et de réception (48).

7. Capteur selon la revendication 6, comprenant en outre des moyens d'application d'une tension CC à une électrode afin de former une piste conductrice jusqu'à une seconde électrode, ledit trajet conducteur comprenant de l'humidité.

8. Capteur capacitif selon la revendication 1, comprenant des électrodes de commande (46) et de déception (48), **caractérisé en ce que** lesdites électrodes (48) sont conçues de manière solidaire avec une fenêtre de véhicule, et dans lequel lesdites électrodes sont adjacentes et coplanaires,

9. Capteur capacitif selon la revendication 8, dans lequel l'une desdites électrodes est conçue avec une forme en U entourant l'autre desdites électrodes.

10. Capteur capacitif selon la revendication 8, lequel capteur comprend une pluralité de paires d'électrodes de commande (46) et de réception (48).

11. Capteur capacitif selon la revendication 8, dans lequel au moins l'une desdites électrodes est conçue avec une forme en U entourant une autre desdites électrodes.

12. Capteur capacitif selon la revendication 8, comprenant une pluralité de paires d'électrodes de commande (46) et de réception (48).

13. Capteur capacitif selon la revendication 8, dans lequel lesdites électrodes comprennent des fils.

14. Capteur capacitif selon la revendication 13, dans lequel lesdits fils sont intégrés à un matériau diélectrique.

15. Capteur capacitif selon la revendication 13, dans lequel lesdits fils sont chevauchés par un fil conducteur relié à la terre.

16. Capteur selon la revendication 6, dans lequel lesdites électrodes sont intégrées à une surface arrière de ladite pièce de garniture.

17. Capteur selon la revendication 6, dans lequel ledit matériau conducteur est appliqué sur une surface arrière de ladite pièce de garniture.

18. Capteur selon la revendication 17, dans lequel ledit matériau conducteur a été appliqué sous forme d'un liquide ou d'une pulvérisation sur ladite surface arrière.

19. Capteur selon la revendication 6, dans lequel lesdites électrodes sont intégrées à une surface avant de ladite pièce de garniture.

20. Capteur selon la revendication 19, comprenant en outre des moyens d'application d'une tension à l'une desdites électrodes en présence d'humidité intégrée à ou recouvrant ladite pièce de garniture.

21. Système selon la revendication 1, dans lequel les capteurs capacitifs sont positionnés à proximité d'une porte à coussin de sécurité gonflable.

22. Capteur selon la revendication 3, dans lequel le substrat est convexe.
